(19) Europäisches Patentamt
European Patent Office
Office européen des brevets

(11) **EP 1 976 108 B1**

(12) **EUROPÄISCHE PATENTSCHRIFT**

(45) Veröffentlichungstag und Bekanntmachung des Hinweises auf die Patenterteilung:
**21.10.2020 Patentblatt 2020/43**

(51) Int Cl.:
*H02M 7/5387* (2007.01) *H02M 3/337* (2006.01)

(21) Anmeldenummer: **08004255.9**

(22) Anmeldetag: **07.03.2008**

(54) **Konverter, insbesondere für ein Ionentriebwerk**

Converter, in particular for an ion engine

Convertisseur, en particulier pour une turbine à ions

(84) Benannte Vertragsstaaten:
**BE DE FR GB IT**

(30) Priorität: **27.03.2007 DE 102007015302**

(43) Veröffentlichungstag der Anmeldung:
**01.10.2008 Patentblatt 2008/40**

(73) Patentinhaber: **Airbus Defence and Space GmbH**
**82024 Taufkirchen (DE)**

(72) Erfinder:
• **Herty, Frank, Dr.**
 **88677 Markdorf (DE)**
• **Hägele, Jochen**
 **88048 Friedrichshafen (DE)**

(74) Vertreter: **Frenkel, Matthias Alexander et al**
**Wuesthoff & Wuesthoff**
**Patentanwälte PartG mbB**
**Schweigerstrasse 2**
**81541 München (DE)**

(56) Entgegenhaltungen:
**EP-A2- 0 297 708     EP-A2- 0 756 370**
**EP-A2- 0 881 759     EP-A2- 0 884 830**
**US-A- 4 855 888**

• **IVO BARBI; ROGER GULES: "Isolated DC-DC Converters With High-Output Voltage for TWTA Telecommunication Satellite Applications", IEEE TRANSACTIONS ON POWER ELECTRONICS, Bd. 18, Nr. 4, Juli 2003 (2003-07), XP11098774,**

**Beschreibung**

Die Erfindung betrifft einen Konverter, insbesondere für ein Ionentriebwerk, gemäß Anspruch 1.

Ionentriebwerke benötigen zum Betrieb elektrische Spannungen im Bereich mehrerer tausend Volt. Hierfür werden Stromversorgungen benötigt, die eine hohe spezifische Leistung und gleichzeitig einen hohen Wirkungsgrad erzielen können. Zum Erzeugen der Hochspannungen umfassen die Stromversorgungen Konverter, die möglichst nur eine einzige Konverterstufe aufweisen sollen, um die benötigte hohe spezifische Leistung bei einem gleichzeitig hohen Wirkungsgrad zu erreichen. Wird jedoch auf einen Vorregler verzichtet, muss der einstufige Konverter voll steuerbar sein, d.h. sowohl bei Leerlauf als auch bei maximaler Last muss die Ausgangsspannung innerhalb der zulässigen Toleranz bleiben.

Dabei stellen die Triebwerke keine reine ohmsche Last dar. Plasmaschwingungen können zu periodischen Impedanzänderungen bei gitterlosen Ionentriebwerken führen. Bei Typen mit Gitter können dort Entladungen auftreten, die zu transienten Kurzschlüssen führen (Beam-Out). Die Anodenstromversorgung muss daher unempfindlich gegen Impedanzänderungen des Triebwerkes sein. Weiterhin ist im Allgemeinen eine galvanische Trennung zwischen der Nieder- und Hochspannungsseite erforderlich. Das führt dazu, dass ein Transformator eingesetzt werden muss. Aufgrund der hohen Übersetzung muss dessen Wicklungskapazität aber besonders berücksichtigt werden.

Stand der Technik bei Konvertern für Ionentriebwerke sind zweistufige Konzepte, bestehend aus einem Vorregler ohne galvanische Trennung, der eine variable Zwischenkreisspannung oder einen variablen Zwischenkreisstrom erzeugt, und einer ungeregelten Stufe zur galvanischen Trennung und zum Hochsetzen auf den benötigten Spannungswert. Die ungeregelte Stufe ist dabei als vollresonante Brückenschaltung oder als Gegentaktstufe ausgelegt. In beiden Fällen wird mit Nulispannungs- und Nullstromschaltern (ZVS: Zero Voltage Switching/ZCS: Zero Current Switching) gearbeitet.

In der Veröffentlichung "Isolated DC-DC Converters With High-Output Voltage for TWTA Telecommunication Satellite Applications", Ivo Barbi, Roger Gules, IEEE Transactions on Power Ectronics, Vol. 18, No. 4, July 2003 wird ein einstufiges Konzept als Weiterentwicklung der Gegentaktstufe vorgestellt. Dabei bleibt jedoch die große Speicherdrossel der Vorstufe erhalten.

Ein weiteres einstufiges Konzept, das auf einem dreiphasigen, vollresonanten Konverter beruht, wird in der Veröffentlichung "Ion and Plasma Thruster Test Console Based on Three-Phase Resonant Conversion Power Modules", Geoffrey N. Drummond, John D. Williams, 42nd AIAA/ASME/SAE/ASEE Joint Propulsion Conference & Exhibit, 9-12 July 2006, Sacramento, California vorgestellt. Vollresonante Konverter können jedoch nur durch Verstimmen der Schaltfrequenz in gewissen Grenzen gesteuert werden.

In der Veröffentlichung "A New High-Efficiency Zero-Voltage, Zero-Current Switching Topology", S.H. Weinberg, European Space Agency. TEC-EPC, Postbus 299, 2200AG Noordwijk, The Netherlands, wird eine quasi-resonant schaltende Gegentaktstufe als Hauptwandler eingesetzt, die mit ZVS/ZCS arbeitet. Um deren Regelbereich zu erweitern, variiert ein kleinerer Konverter gleichen Typs die Primärspannung des Hauptkonverters. Damit wird erreicht, dass die ZVS/ZCS Betriebsart über einen größeren Stellbereich erhalten bleibt.

Die Patentveröffentlichung EP 0 884 830 A2 zeigt einen Konverter geeignet für einen Hochspannungsbetrieb nach dem Oberbegriff des Anspruchs 1.

Allen Lösungen gemein ist die Kompatibilität mit der Wicklungskapazität des Hochspannungstransformators. Konzepte mit sekundärseitiger Stromglättung scheiden daher aus.

Eine Aufgabe der vorliegenden Erfindung besteht nun darin, einen verbesserten Konverter, insbesondere für Ionentriebwerke, vorzuschlagen. Insbesondere soll die Erfindung eine Möglichkeit zur Spannungsumformung mit einem Konverter schaffen, die einerseits ein hohes Transformationsverhältnis und andererseits trotzdem eine einfache und damit leichte sowie kostengünstige Möglichkeit zur Einstellung des Laststromes ermöglicht, ohne dass eine hohe Welligkeit der Ausgangsspannung zu befürchten ist.

Diese Aufgabe wird durch einen Konverter mit den Merkmalen des Anspruchs 1 gelöst. Weitere Ausgestaltungen der Erfindung ergeben sich aus den abhängigen Ansprüchen.

Die vorliegende Erfindung basiert auf der Erkenntnis, dass die Spannungsumformung mit einer präzisen aber zugleich einfachen Einstellung des Laststromes dadurch erreicht werden kann, dass die erforderlichen schaltungstechnischen Maßnahmen im Primär- und Sekundärkreis des Konverters erfolgen und dadurch die (hohe) Kapazität der Sekundärwicklung, die aufgrund des hohen Übersetzungsverhältnisses erforderlich ist, keinerlei negativen Einfluss auf die Spannungsumformung ausüben kann. Außerdem kann durch ein zeitversetztes Öffnen bzw. Schließen von Schaltern innerhalb der Brückenschaltung erreicht werden, dass sich die dadurch hervorgerufenen Strompfade zyklisch aufteilen und wieder zusammenfügen und dass der Kopplungspunkt durch den Zeitversatz bei Öffnen bzw. Schließen der Schalter der Brückenschaltung einstellbar ist. Da dieser Kopplungspunkt jedoch direkt auf die Stromamplitude wirkt, die sich im stationären Betrieb der Spannungsumformung einstellt, lässt sich über die Einstellung des Kopplungspunktes auch der Betrag der erzeugten Hochspannung während der Spannungsumformung indirekt steuern.

Der erfindungsgemäße Ansatz bietet dabei den Vorteil, dass gegenüber dem Stand der Technik durch einfache konstruktive Mittel eine gute Steuerbarkeit des Laststromes bei zugleich hoher Spannungsübersetzung möglich ist, und zugleich noch zusätzlich auf Impedanzveränderungen in der gespeisten Last mit einer adäquaten Anpassung der zu übertragenden Leistung reagiert werden kann. Weiterhin wird die Anpassung der zu übertragenden Leistung lediglich in einem Umladevorgang während einem Umschalten des Konverters realisiert, so dass nahezu keine Veränderung des Tastgrades erforderlich ist. Somit kann die geforderte Restwelligkeit des von dem Konverter aufgenommenen Stromes und des Laststromes mit verhältnismäßig geringem Filteraufwand erzielt werden, obwohl die Schaltfrequenz niedrig angesetzt werden kann (was zusätzlich die frequenzabhängigen Verluste in Filterbauteilen oder Speicherdrosseln reduzieren hilft).

Gemäß einer Ausführungsform der Erfindung ist ein Konverter, insbesondere für ein Ionentriebwerk, vorgesehen, mit

einer Brückenschaltung mit einem ersten und zweiten Brückenschaltungsanschluss und mit zwei Brückenzweigen, wobei die Brückenschaltung vier Schalter mit je einem ersten und zweiten Anschluss umfasst, wobei je der erste Anschluss eines ersten und dritten Schalters mit dem ersten Brückenschaltungsanschluss, der zweite Anschluss des ersten Schalters mit dem ersten Anschluss eines zweiten Schalters, der zweite Anschluss des dritten Schalters mit dem ersten Anschluss eines vierten Schalters und je der zweite Anschluss des zweiten und vierten Schalters mit dem zweiten Brückenschaltungsanschluss verbunden, mit

einer Speicherinduktivität und einem Hochspannungstransformator mit einer Primär- und einer Sekundärwicklung, wobei die Primärwicklung und die Speicherinduktivität in Reihe geschaltet sind und diese Reihenschaltung de zweiten Anschluss des ersten Schalters und dem zweiten Anschluss des dritten Schalters verschaltet ist und die Sekundärwicklung mit einem Ausgang des Konverters verbunden ist und

einer Schaltersteuereinheit, die ausgebildet ist, um Schalter innerhalb eines Brückenzweiges so anzusteuern, dass diese zwischen dem Umschalten eine Totzeit eingefügt wird, um einen Brückenkurzschluss zu verhindern und um die Schaltvorgänge unter Nullspannungsbedingungen oder niedrigster Spannung durchführen zu können und die ausgebildet ist, um einen Schalter des ersten Brückenzweiges von einer Steuerzeit zeitlich verzögert gegenüber einem Schalter des zweiten Brückenzweiges Schalter zu öffnen oder zu schließen.

Gemäß einer weiteren Ausführungsform der Erfindung zwischen der Primärwicklung und dem zweiten Anschluss des dritten Schalters eine Hilfsinduktivität geschaltet sein

Alternativ oder zusätzlich zum Vorsehen der Hilfsinduktivität kann gemäß einer weiteren Ausführungsform der Erfindung der Konverter ein Diodenzweig, bestehend aus zwei Dioden, aufweisen, wobei die Kathode der ersten Diode zwischen der Primärwicklung des Hochspannungstransformatorsder Hilfsinduktivität ses geschaltet und die Anode der ersten Diode mit dem zweiten Brückenschaltungsanschluss verbunden ist. Die Kathode der zweiten Diode sollte mit dem ersten Brückenschaltungsanschluss verbunden und die Anode der zweiten Diode ebenfalls zwischen der Primärwicklung und der Hilfsinduktivität und den geschaltet sein. Diese Ausführungsform ist für den Fall vorgesehen, dass MOSFET-Transistoren als Schalter verwendet werden, deren Body-Diode dann nicht hart schaltend betrieben wird und somit ein Ausfall des Konverters aus diesem Grund vermieden werden kann.

Weiterhin kann in einer Ausführungsform der Erfindung auch zwischen den ersten und zweiten Anschlüssen des zweiten und vierten Schalters je eine Kapazität geschaltet sein. Hierdurch kann eine vorteilhaft niedrige Spannungsbelastung während dem Einschaltvorgang bei allen vier Schaltern bewirkt werden (Nullspannungsschalten), so dass die Einschaltverluste möglichst gering gehalten werden können.

Ferner kann in einer weiteren Ausführungsform der Erfindung zwischen den ersten und zweiten Anschlüssen aller Schalter je eine Diode geschaltet sein, sofern die verwendete Ausführung der Schalter keine inhärente Diode aufweist, deren Anode mit dem ersten Anschluss und deren Kathode mit dem zweiten Anschluss des jeweiligen Schalters verbunden ist.

In einer weiteren Ausführungsform der vorliegenden Erfindung kann zur Sekundärwicklung des Hochspannungstransformators eine Kapazität parallel geschaltet sein. Hierdurch wird es ermöglicht, dass eine sekundärseitige Mindestkapazität nicht unterschritten wird, die für ein resonantes Umladen der Induktivitäten und die Zwischenspeicherung von Energie erforderlich ist.

Gemäß der Erfindung ist die Schaltersteuereinheit ferner ausgebildet, die Steuerzeit derart zu bestimmen, dass sie höchstens einem Zehntel derjenigen Zeitspanne entspricht, die zwischen einem Öffnen und Schließen desselben Schalters vergeht. Hierdurch kann sichergestellt werden, dass der Tastgrad möglichst hoch ist und sich auch nicht wesentlich ändert, so dass im Hochspannungstransformator nahezu rechteckförmige Strompulse entstehen, so dass die nach dem Gleichrichten entstehende Stromkurve einen vorteilhaft niedrigen Formfaktor und eine vorteilhaft kurze Lückzeit aufweist, wobei der Formfaktor ausschlaggebend für die ohmschen Verluste ist und die Lückzeit ausschlaggebend für die Stromwelligkeit und den damit verbundenen Filteraufwand.

Ferner kann auch in einer weiteren Ausführungsform der Erfindung die Schaltersteuereinheit ausgebildet sein, um bei einem wiederholten Öffnen des vierten Schalters nach einem Öffnen des ersten Schalters eine gegenüber dem vorhergehenden Öffnen des vierten Schalters veränderte Steuerzeit zu verwenden. Dies ermöglicht, dass beim Betrieb des Konverters unterschiedliche Steuerzeiten verwendet werden können, durch die sich somit auch unterschiedliche Leistungen über den Konverter übertragen lassen. Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugzeichen verwendete Begriffe und zugeordnete Bezugzeichen verwendet.

Die Zeichnungen zeigen in:

Fig. 1 ein Prinzipschaltbild eines Ausführungsbeispiels des erfindungsgemäßen Konverters in einer Ausführungsvariante mit einem Brückengleichrichter im Sekundärzweig;

Fig. 2. ein Diagramm von verschiedenen Stromverläufen von in Fig. 1 gekennzeichneten Strömen über der Zeit;

Fig. 3 ein Ersatzschaltbild des Ausgangskreises des in Fig. 1 dargestellten Ausführungsbeispiels des erfindungsgemäßen Konverters;

Fig. 4 ein Diagramm einer Kommutierungskurve für das in Fig. 1 dargestellte Ausführungsbeispiel des erfindungsgemäßen Konverters;

Fig.5 ein Diagramm eines Steuerkennlinienfeldes im Zusammenhang mit dem in Fig. 1 dargestellten Ausführungsbeispiel der vorliegenden Erfindung;

Fig. 6 ein Diagramm zur Verdeutlichung des Einflusses der Ausgangsspannung auf den Transformatorstrom in Zusammenhang mit dem in Fig. 1 dargestellten Ausführungsbeispiel und

Fig. 7 ein regelungstechnisches Blockschaltbild des in Fig. 1 dargestellten Ausführungsbeispiels des erfindungsgemäßen Konverters.

Im Folgenden können gleiche und/oder funktional gleiche Elemente mit den gleichen Bezugzeichen versehen sein. Die im Folgenden angegebenen absoluten Werte und Maßangaben sind nur beispielhafte Werte und stellen keine Einschränkungen der Erfindung auf derartige Dimensionen dar.

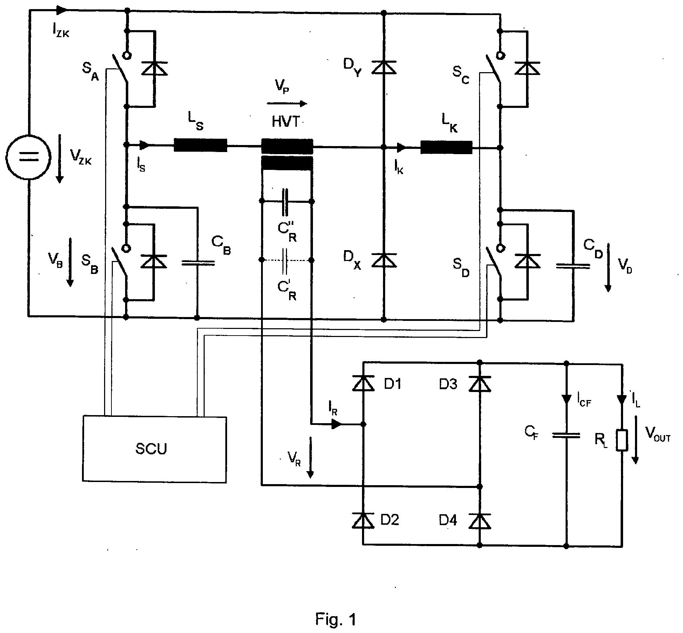

Wie in Fig. 1 dargestellt ist besteht der Konverter gemäß einem Ausführungsbeispiel der vorliegenden Erfindung aus einer H-Brücke und einem zusätzlichen Diodenzweig. Ein Hochspannungstransformator ist zwischen dem linken Zweig $S_A$, $S_B$ und dem Diodenzweig $D_X$, $D_Y$ verschaltet, wobei die Speicherdrossel $L_S$ in Reihe zu der Primärwicklung liegt. Eine weitere Speicherdrossel $L_K$ ist zwischen dem Diodenzweig und dem rechten Zweig der Brücke $S_C$, $S_D$) geschaltet. Parallel zu den Schaltern $S_B$ und $S_D$ liegen die ZVS-Kondensatoren $C_B$ und $C_D$ (ZVS = Zero Voltage Switching).

Der Hochspannungstransformator HVT setzt die Zwischenkreisspannung $V_{ZK}$ auf den benötigten Wert hoch und sorgt für eine galvanische Trennung. Das Übersetzungsverhältnis des Transformators ist so gewählt, dass es dem Verhältnis der (nominellen) Zwischenkreisspannung $V_{ZK}$ und der Ausgangsspannung $V_{OUT}$ entspricht. Die Wicklungskapazität des Hochspannungstransformators wird durch ein konzentriertes Bauteil $C_R"$ modelliert. Da diese Kapazität einen Mindestwert nicht unterschreiten darf, muss gegebenenfalls eine externe Kapazität ($C_R'$) dazugeschaltet werden, so dass sich die resultierende Kapazität $C_R$ ergibt. Die beiden Zweige der Brücke werden so gesteuert, dass der obere und untere Schalter abwechselnd und nahezu gleich lange geschlossen. Jeder Schalter bleibt innerhalb eines Schaltzyklus zu je etwa 50% der Zykluszeit abzüglich einer Totzeit geschlossen. Die Schaltersteuereinheit SCU ist dabei derart ausgelegt, dass durch sie die Schalter $S_A$, $S_B$, $S_C$ und $S_D$ einzeln und in definierten zeitlichen Abständen zueinander geschaltet werden können.

Die Einstellung des Ausgangsstromes der Brücke wird dadurch erreicht, dass der rechte Brückenzweig C-D so gesteuert wird, dass alle Flanken der Steuersignale beider Schalter um eine bestimmte Zeit $t_c$ gegenüber den Signalflanken des Zweigs A-B nacheilen. Der Zeitversatz wird im Folgenden als Steuerzeit $t_c$ bezeichnet. Die Steuerzeit $t_c$ beträgt dabei nur einen Bruchteil der gesamten Dauer eines Schaltzyklus, d.h. die Dauer einer Periode, die durch die Schaltfrequenz gegeben ist und demzufolge nur einen geringen Einfluss auf den Tastgrad des Transformatorstroms hat.

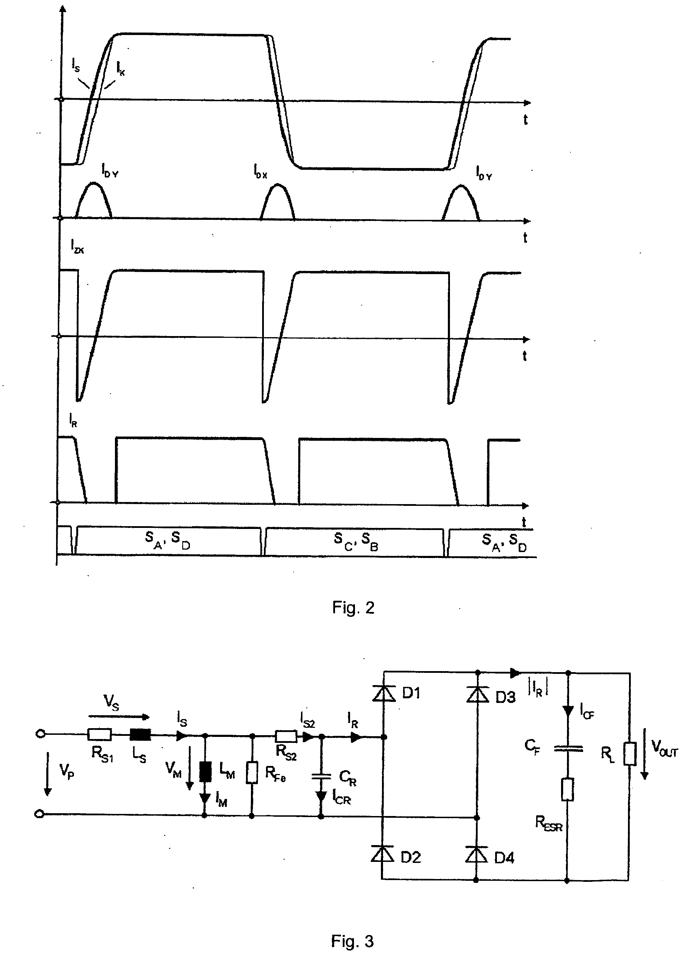

Die Eigenschaften des Konverters zeichnen sich dadurch aus, dass sich im stationären Betrieb die Amplituden der primären und sekundären Ströme des Hochspannungstransformators während den Energieübertragungsperioden nur wenig verändern. Daher ergibt sich ein nahezu rechteckförmiger Stromverlauf, wie in Fig. 2 dargestellt ist. Weiterhin existiert ein eindeutiger Zusammenhang zwischen der Stromamplitude und der Steuerzeit $t_c$, was nachfolgend noch detailliert erörtert werden wird. Die Stromamplitude kann daher durch Verändern der Steuerzeit für jeden Schaltzyklus neu eingestellt werden.

Der Wechsel zwischen der positiven und negativen Halbschwingung des Stromes basiert auf resonanten Umschwingvorgängen. Demzufolge können die Leistungsschalter in einem Spannungsminimum geschlossen werden, wobei dieses Minimum bei mittleren und hohen Lastströmen Null und bei kleinen Lastströmen ein Bruchteil der Zwischenkreisspannung ist.

Prinzipiell wären diese Funktionen auch ohne den in Fig. 1 dargestellten zusätzlichen Diodenzweig und ohne $L_K$ erreichbar. Innerhalb des Umschaltvorgangs zwischen positiver und negativer Halbschwingung des primären Transformatorstromes käme es jedoch zu dem Fall, dass die Dioden des Zweiges ($S_C$, $S_D$) hart schalten. Der plötzliche Aufbau der Sperrspannung kann zu einem hohen Rückstrom führen, insbesondere wenn man als Schalter MOSFETs einsetzt und deren (langsame) Body-Diode nutzt. Der Rückstrom kann einen Ausfall des Bauteils verursachen.

Sowohl Eingangs- als auch Ausgangsstrom bestehen aus aneinander gereihten, rechteckförmigen oder rechteckähnlichen Strompulsen. Die Filterstufen am Ein- und Ausgang müssen nur auf die vergleichsweise schmalen Lücken zwischen den Pulsen ausgelegt werden. Die Amplitude sowie die Welligkeit der Ströme nehmen aus demselben Grund auch nicht zu, wenn die Schaltfrequenz verringert wird.

Mit kleinerer Schaltfrequenz muss zwar ein größerer Transformatorkern in Kauf genommen werden, die Filterbauteile sowie die Drosseln $L_S$ und $L_K$ müssen jedoch nicht neu dimensioniert werden. Eine möglichst niedrige Schaltfrequenz ist deshalb wünschenswert, weil man dadurch die Wirbelstromverluste in den magnetischen Bauteilen (Proximity Effekt) deutlich reduzieren kann.

Für die folgende Beschreibung des in Fig. 1 dargestellten Ausführungsbeispiels der vorliegenden Erfindung werden zur Vereinfachung der Beschreibung im Folgenden ideale Schalter und Gleichrichterdioden angenommen.

Die Energiequelle (Zwischenkreis) ist mit der Senke (Lastkreis) über eine oder mehrere dazwischen geschaltete Speicherdrosseln miteinander verbunden. Während der Energieübertragung fließt ein Strom von der Quelle zur Senke. Dabei wird ein Teil der Energie in den Drosseln (d.h. Induktivitäten) gespeichert. Die verbleibende Energie wird zur Last übertragen. Während der Umschaltvorgänge wird ein Teil der in den Drosseln gespeicherten Energie in die Last und der Rest zurück in die Quelle übertragen. Mit Hilfe der Brückenschaltung wird die Stromrichtung zweimal pro Schaltzyklus umgeschaltet.

In der ersten Hälfte des Schaltzyklus führt der Strompfad während der Energieübertragung über den Schalter $S_A$ und über die Reihenschaltung bestehend aus Speicherdrossel $L_S$, Transformator-Primärwicklung und Hilfsdrossel $L_K$. Die Dioden $D_X$ und $D_Y$ führen keinen Strom. Über den Schalter $S_D$ schließt sich der Stromkreis. In der zweiten Hälfte des Schaltzyklus führt der Pfad dementsprechend über $S_c$ und $S_B$.

Auf der Sekundärseite fließt der Strom über den Gleichrichter zum Ausgangsfilter. Dabei wird die Ausgangsspannung auf die Primärseite des Transformators abgebildet (reflektiert). Das Übersetzungsverhältnis des Transformators ist nun möglichst so gewählt, dass die reflektierte Ausgangsspannung möglichst genau der Höhe der Zwischenkreisspannung entspricht.

Bei der Auslegung des Übersetzungsverhältnisses sind daher auch Spannungsfälle der Dioden, Schalter sowie der Zuleitungen mit zu berücksichtigen.

Während der Energieübertragung kompensieren sich die Zwischenkreisspannung und die reflektierte Ausgangsspannung, so dass über den Drosseln $L_S$ und $L_K$ keine Spannungsdifferenz verbleibt. Als Folge davon kann sich der Strom durch $L_S$ und $L_K$ nicht ändern. Daher entsteht das horizontale Teilstück der Stromkurve, die in Fig.2 dargestellt ist.

Ändern sich Zwischenkreis- oder Ausgangsspannung, kann dieser Gleichgewichtszustand nicht mehr beibehalten werden. Das horizontale Teilstück der Stromkurve wird zu einer Rampe. Dies wird in einem späteren Abschnitt noch detaillierter erläutert.

Die Schaltungszustände bestehen aus den jeweiligen Zuständen der Leistungsschalter ($S_A$ bis $S_D$), den Ladezuständen der Energiespeicher sowie der sich daraus ergebenden Strompfade der Schaltung. Die Schaltungszustände bleiben für eine bestimmte Zeitspanne innerhalb eines Schaltzyklus bestehen. Diese Zeitspannen werden im Folgenden als Abschnitte bezeichnet.

Ableitung der Differentialgleichungen Aus den Schaltungszuständen können mit Hilfe des in Fig. 3 dargestellten Ersatzschaltbildes die dazugehörigen Differentialgleichungen aufgestellt werden. Es müssen dabei nur die Schaltungsteile berücksichtigt werden, die im jeweiligen Strompfad liegen.

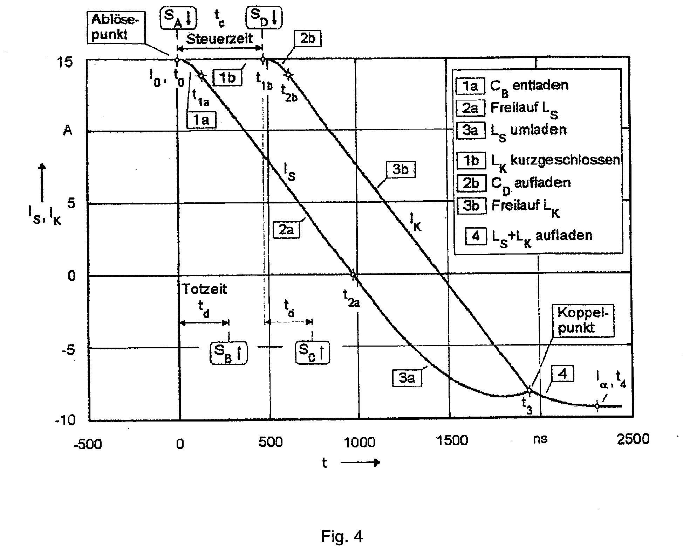

Aus den abschnittsweisen Lösungen dieser Differentialgleichungen können Strom- und Spannungsverläufe aller Bauteile des Konverters erstellt werden, wie sie für das in Fig. 1 gezeigte Ausführungsbeispiel und in Fig. 4 näher dargestellt sind. Man setzt die Verläufe abschnittsweise zusammen, wobei die Endwerte des vorherigen Abschnitts als Anfangswerte für die Lösung der Differentialgleichung des nächsten Abschnitts dienen. Aus Symmetriegründen wird im Folgenden nur die erste Hälfte des Schaltzyklus betrachtet. Weiterhin seien alle Größen auf die Primärseite bezogen.

Die ohmschen Widerstände der Transformatorwicklungen sowie die sekundärseitige Streuung und die Kernverluste beeinflussen die Strom- und Spannungsverläufe nur wenig und werden daher nicht mit berücksichtigt.

Abschnitt 1a

Der in Fig. 4 dargestellte Abschnitt 1a beginnt damit, dass der Schalter $S_A$ geöffnet wird, was mit dem Symbol $S_A \downarrow$ gekennzeichnet ist. Damit wird der Wechsel von der positiven zur negativen Halbschwingung des primären Transformatorstromes und damit auch des Drosselstroms $I_S$ eingeleitet. Als erster Anfangswert wird dabei der Drosselstrom $I_S$ herangezogen, der unmittelbar vor Beginn dieses Abschnitts vorlag.

Der Strom durch $L_S$ nimmt ab, wobei die im Kondensator $C_B$ gespeicherte Energie nun anstelle der Spannungsquelle den Strom weiter treibt. Da die Gleichrichterdioden auf der Ausgangsseite noch leiten, wird die Energie aus $L_S$ und $C_B$ auf die Ausgangsseite übertragen. Sobald $C_B$ vollständig entladen ist, d.h. $V_B = 0$, kommutiert der Strom auf die Freilaufdiode von $S_B$. Damit endet Abschnitt 1a.

Abschnitt 1a $C_B$ entladen, bis $V_B = 0$

Bezugszeit $t_0$     Abschnittsende: $t_{1a}$

Strom

$$I_S(t) = \frac{V_{ZK} - V_{OUT}}{\omega \cdot L_S} \cdot \sin(\omega t) + I(t_0) \cdot \cos(\omega t)$$

Spannung

$$V_B(t) = V_{ZK} - (V_{ZK} - V_{OUT})(1 - \cos(\omega t)) - \frac{I(t_0)}{\omega \cdot C_B} \cdot \sin(\omega t)$$

Parameter

$$\omega := \frac{1}{\sqrt{L_S \cdot C_B}}$$

Abschnitt 2a

Abschnitt 2a folgt auf Abschnitt 1a und beschreibt den vollständigen Freilauf von $L_S$. Der Strompfad für den Freilaufstrom führt über die Primärwicklung des Transformators zur Diode $D_X$ und weiter zur Diode von Schalter $S_B$. Die Diode $D_X$ wird dabei von dem größeren Strom $I_K$ leitend gehalten. Als Gegenspannung tritt nur die reflektierte Ausgangsspannung $V_{OUT}$ auf. Dies führt zu einer linearen Abnahme des Drosselstromes. Die Energieübertragung zur Sekundärseite endet ebenfalls mit diesem Abschnitt.

Abschnitt 2a     Freilauf von $L_S$ gegen $V_{OUT}$ bis $I_S = 0$

Bezugszeit $t_{1a}$     Abschnittsende $t_{2a}$

Strom

$$I_S(t) = I_S(t_{1a}) - \frac{V_{OUT}}{L_S} \cdot t$$

Abschnitt 3a

Abschnitt 3a beginnt mit dem Nulldurchgang des Stromes $I_S$. Die Dioden des Ausgangsgleichrichters sperren und der Hilfskondensator $C_R$ bzw. $C_R$ ist auf die Ausgangsspannung aufgeladen. Nun beginnt ein resonanter Umschwingvorgang, an dem die Elemente $L_S$ und $C_R$ beteiligt sind. Der Strompfad für $I_S$ führt über Diode $D_X$, die wegen dem noch positiven Strom $I_K$ vorwärts leitend ist. Weiterhin fließt der Strom $I_S$ über Schalter $S_B$, der zu Beginn dieses Abschnitts bereits geschlossen ist, d.h. nach einer Totzeit $t_d$ nach dem Öffnen von Schalter $S_A$ selbst geschlossen wird (was in Fig. 4 mit der Bezeichnung $S_B \uparrow$ gekennzeichnet ist). Damit besteht der Resonanzkreis aus $L_S$ und auf die Primärseite umgerechnete Kapazität $C_R$.

Der Umschwingvorgang beginnt damit, dass sich $I_S$ in negativer Richtung aufbaut. Zeitgleich dazu nimmt der Drosselstrom $I_K$ weiter ab und läuft ins Negative, siehe dazu Abschnitt 3b. Sobald beide Ströme $I_S$ und $I_K$ gleich groß werden, hört die Diode $D_X$ auf zu leiten. Beide Ströme sind nun gekoppelt. Es stellt sich ein neuer Strompfad über die Schalter $S_C$ und $S_B$ für den gemeinsamen Strom $I_S = I_K$ ein. Der resonante Umschwingvorgang wird dadurch abgebrochen. An diesem Koppelpunkt enden die Abschnitte 3a und 3b.

Abschnitt 3a Bezugszeit $t_{2a}$     $L_S$ umladen gegen Kondensatorspannung $V_R$ bis $I_S = I_K$ Abschnittsende $t_3$

Strom

$$I_S(t) = \frac{V_{OUT}}{\omega \cdot L_S} \cdot \sin(\omega t)$$

Spannung     $V_R(t) = V_{OUT} \cdot \cos(\omega t)$

Parameter

$$\omega := \frac{1}{\sqrt{L_S \cdot C_R}}$$

Abschnitt 4

Nachdem die Ströme $I_S$ und $I_K$ gekoppelt sind, beginnt Abschnitt 4. Obwohl die Schalter $S_C$ und $S_B$ bereits geschlossen sind, wird noch keine Energie zum Ausgang übertragen, weil die Dioden des Ausgangsgleichrichters noch nicht leiten können. Die Energie aus der Spannungsquelle $V_{ZK}$ fließt zunächst in den Kondensator $C_R$, der wegen des abgebrochenen Umschwingvorgangs noch nicht vollständig umgeladen werden konnte. Dieser Umladevorgang wird nun fortgesetzt. Abschnitt 4 endet damit, dass der Kondensator $C_R$ vollständig auf den negativen Wert der Ausgangsspannung aufgeladen ist.

Abschnitt 4 Bezugszeit $t_3$     $C_R$ und $L_S + L_K$ aufladen mit $V_{ZK} + V_R$ bis $V_R = V_{OUT}$ Abschnittsende $t_4$

Strom

$$I_S(t) = -\frac{V_{ZK} + V_R(t_3)}{\omega \cdot (L_S + L_K)} \cdot \sin(\omega t) + I_S(t_3) \cdot \cos(\omega t)$$

Spannung

$$V_R(t) = -(V_{ZK} + V_R(t_3)) \cdot (1 - \cos(\omega t)) + \frac{I_S(t_3)}{\omega \cdot C_R} \cdot \sin(\omega t) + V_R(t_3)$$

Parameter

$$\omega := \frac{1}{\sqrt{(L_S + L_K) \cdot C_R}}$$

Abschnitt 1b

Abschnitt 1b beginnt ebenfalls mit dem Öffnen des Schalters $S_A$ (was in Fig. 4 mit der Bezeichnung $S_A \downarrow$ gekennzeichnet ist). $L_S$ hat keine Gegenspannung und hält infolgedessen den Strom konstant. Der Strompfad führt über die Diode $D_X$ und den Schalter $S_D$. Abschnitt 1b endet daher mit dem Öffnen des Schalters $S_D$ (was mit der Bezeichnung $S_D \downarrow$ gekennzeichnet ist).

Abschnitt 1b     Freilauf $L_K$

Bezugszeit     $t_0$ Abschnittsende $t_{1b}$

Strom     $I_K = I_S(t_0)$

Abschnitt 2b

Abschnitt 2b schließt sich an Abschnitt 1b an. Er beginnt mit dem Ablauf der Steuerzeit, d.h. mit dem Öffnen des Schalters $S_D$. Infolgedessen fließt der Drosselstrom $I_K$ nun zunächst durch den Kondensator $C_D$. Dieser lädt sich solange auf, bis die Kondensatorspannung $V_D$ den Wert der Zwischenkreisspannung erreicht hat. Damit endet Abschnitt 2b.

Abschnitt 2b     $C_D$ aufladen, bis Kondensatorspannung $V_D = V_{ZK}$

Bezugszeit     $t_{1b}$ Abschnittsende $t_{2b}$

Strom     $I_K(t) = I_S(t_0) \cdot \cos(\omega t)$

Spannung

$$V_D(t) = \frac{I_S(t_0)}{\omega \cdot C_D} \cdot \sin(\omega t)$$

(fortgesetzt)

| | |
|---|---|
| Abschnitt 2b | $C_p$ aufladen, bis Kondensatorspannung $V_D = V_{ZK}$ |
| Bezugszeit | $t_{1b}$ Abschnittsende $t_{2b}$ |
| Parameter | |

$$\omega := \frac{1}{\sqrt{L_K \cdot C_D}}$$

Abschnitt 3b

Sobald der Kondensator $C_D$ vollständig geladen ist, beginnt Abschnitt 3b. Der Freilaufpfad von $I_K$ besteht aus der Diode von Schalter $S_c$, der Spannungsquelle $V_{ZK}$ sowie der Diode $D_X$. Der Freilauf der Drossel $L_K$ gegen die Spannungsquelle $V_{ZK}$ bewirkt eine lineare Abnahme des Drosselstromes.

Die Ansteuerung der Schalter ist nun so ausgelegt, dass spätestens zum Nulldurchgang des Drosselstromes $I_K$ Schalter $S_c$ geschlossen ist (in Fig. 4 ist das Schließen des Schalters $S_C$ nach einer Totzeit $t_d$ nach dem Öffnen des Schalters $S_D$ mit dem Symbol $S_C \uparrow$ gekennzeichnet). Infolgedessen kann sich $I_K$ in Gegenrichtung wieder linear aufbauen. Der Strompfad ändert sich dabei nicht. Zum Zeitpunkt des Nulldurchgangs von $I_K$ ist der Drosselstrom $L_S$ bereits negativ, siehe Abschnitt 3a. Solange $I_S$ negativer als $I_K$ bleibt, muss die Differenz der Ströme durch $D_X$ fließen. Dadurch bleibt die Diode $D_X$ in Vorwärtsrichtung leitend.

Aufgrund des resonanten Umschwingvorgangs nähern sich die Ströme $I_S$ und $I_K$ einander an. Am Koppelpunkt sind beide gleich groß. Die Diode $D_X$ geht in den Sperrzustand. Damit endet Abschnitt 3b.

| | |
|---|---|
| Abschnitt 3b | Umladen von $L_K$ mit $V_{ZK}$ bis $I_s = I_K$ |
| Bezugszeit | $t_{2b}$ Abschnittsende $t_3$ |
| Strom | |

$$I_K(t) = I_K(t_{2b}) - \frac{V_{ZK}}{L_K} \cdot t$$

Stromkurvenform während der Kommutierung

Die gesamte Kurvenform der Drosselströme $I_S$ und $I_K$ erhält man durch aneinanderreihen der einzelnen Kurvenstücke wie in Fig. 4 dargestellt ist.

Beide Ströme sind bis zum Ablösepunkt identisch. Durch die Steuerzeit bedingt fällt $I_K$ später als $I_S$ ab. Die Differenz beider Ströme fließt durch den Diodenzweig. Am Koppelpunkt laufen beide Ströme wieder zusammen. Die Kommutierung ist beendet, wenn die Energieübertragung einsetzt, d.h. wenn der Ausgangsgleichrichter leitend wird. Das geschieht zum Zeitpunkt $t_4$.

Mit der Steuerzeit $t_c$ kann man nun den neuen Anfangswert des Transformatorstromes $I_S$ auswählen. Dieser Anfangswert wird Knickpunktstrom $I_\alpha$ genannt, da er den Übergang von der steilen Stromflanke der Kommutierung zum flachen Teilstück des Transformatorstromes markiert.

Der Einfluss der Steuerzeit ist wie folgt: Eine Vergrößerung der Steuerzeit $t_c$ bewirkt, dass die Kopplung der Ströme $I_S$ und $I_K$ ebenfalls später stattfindet. Der resonante Umschwingvorgang (Abschnitt 3a in Fig. 4) wird dadurch erst später abgebrochen. Denkt man sich die Kurvenform aus Abschnitt 3a fortgesetzt, verschiebt sich der Koppelpunkt dann näher zur Nulllinie. Damit beginnt auch die Energieübertragung mit einem betragsmäßig geringeren Knickpunktstrom. Wählt man die Steuerzeit dagegen kleiner, steigt der Anfangswert.

Zusammenhang zwischen Steuerzeit und Transformatorstrom

Den Zusammenhang zwischen Steuerzeit und Anfangswert $I_\alpha$ erhält man numerisch durch mehrfaches Berechnen der Kommutierungsstromkurve für verschiedene Steuerzeiten $t_c$. An den Zeitfunktionen der einzelnen Abschnitte erkennt man, dass folgende Parameter den Anfangswert beeinflussen können:

- Vorheriger Knickpunktstrom $I_S(t_0 - \frac{T}{2})$

- Zwischenkreisspannung $V_{ZK}$
- (reflektierte) Ausgangsspannung $V_{OUT}$

Anhand der Kurvenform der Drosselströme $I_S$ und $I_K$ kann man erkennen, dass der vorherige Anfangswert keinen Einfluss auf den neuen Anfangswert hat: Bis zum Nulldurchgang sind beide Verläufe praktisch identisch, es besteht lediglich ein zeitlicher Versatz. Dieser wird aber nicht durch den Anfangswert beeinflusst. Aus diesem Grund bleibt auch die Stromamplitude am Koppelpunkt unbeeinflusst.

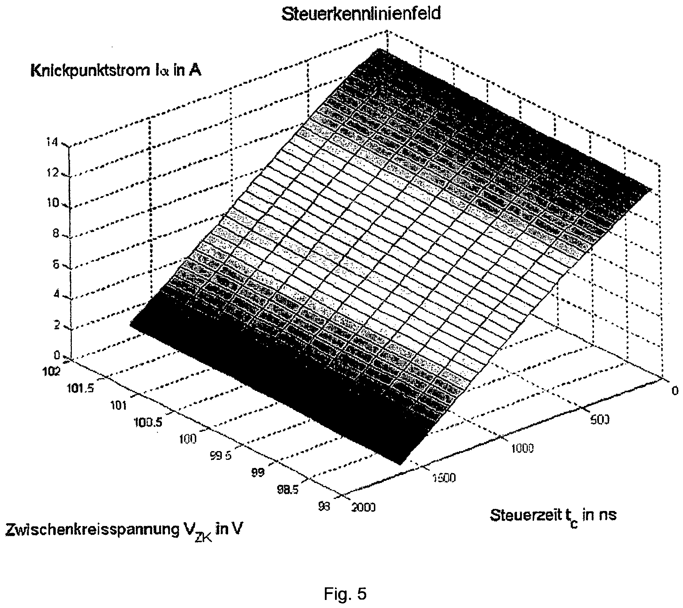

Da $L_S$ gegen die reflektierte Ausgangsspannung, $L_K$ jedoch gegen die Zwischenkreisspannung freiläuft, wird der Knickpunktstrom $I_\alpha$ im Wesentlichen von der Differenz dieser Spannungen beeinflusst. Trägt man $I_\alpha$ über der Steuerzeit und der Zwischenkreisspannung als zweiten Parameter auf, erhält man das Steuerkennlinienfeld des Konverters für eine gegebene Ausgangsspannung, was in Fig. 5 näher dargestellt ist.

Die vorstehende Beschreibung bezieht sich insbesondere auf den Wechsel der Ströme $I_S$ und $I_K$ von der positiven zur negativen Halbschwingung. Die Vorgehensweise ist bei einem Wechsel in die inverse Richtung, d.h. bei dem Wechsel zur positiven Halbschwingung analog.

Regelungstechnisches Modell des Konverters

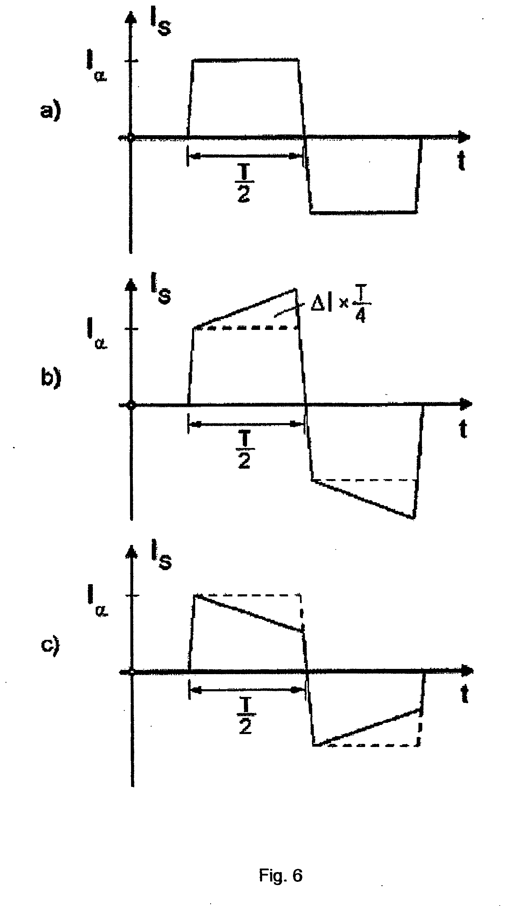

Wenn sich die Ausgangsspannung z.B. durch einen Lastsprung verändert, dann fällt über den Drosseln $L_S$ und $L_K$ während der Energieübertragung die Differenz der Zwischenkreisspannung und reflektierter Ausgangsspannung ab. Sinkt beispielsweise die Ausgangsspannung ab, ist diese Differenz positiv. Damit steigt der Strom während der Energieübertragung linear an. Es entsteht also eine zusätzliche Strom-Zeit Fläche (siehe Fig. 6b). Als Folge davon wird mehr Energie zum Ausgang übertragen, so dass die Ausgangsspannung wieder ansteigen wird. Im umgekehrten Fall wird die Strom-Zeit Fläche verkleinert, wenn die Ausgangsspannung zu hoch ist (siehe Fig. 6c). In Fig. 6a ist dagegen der Fall dargestellt, bei dem die Ausgangsspannung und die Zwischenkreisspannung gleich groß sind.

Bei Änderungen der Zwischenkreisspannung kommt es jedoch ebenfalls zu Änderungen der Strom-Zeit Fläche. Dabei reagiert der Konverter so, dass die Ausgangsspannung immer der Zwischenkreisspannung nachgeführt wird. Der mittlere Strom durch den Gleichrichter berechnet sich innerhalb eines Energieübertragungsintervalls zu:

$$\bar{I}_R = D \cdot I_\alpha + \frac{T}{4} \cdot \frac{V_{ZK} - V_{OUT}}{L_S + L_K}, \; T = \frac{1}{f_s}$$

Zur Vereinfachung werden alle Größen auf die Primärseite des Transformators bezogen. Dabei ist T die Dauer eines kompletten Schaltzyklus bei der Schaltfrequenz $f_s$ und D ist der Tastgrad der Strompulse, wobei die Dauer des negativen und positiven Impulses kumulativ berücksichtigt wird.

Weiterhin kann man das dynamische Verhalten des Ausgangsfilters im Laplace-Bereich wie folgt beschreiben:

$$V_{OUT} = \frac{1}{s \cdot C_F} \left[ \bar{I}_R - \frac{V_{OUT}}{R_L} \right]$$

Führt man nun den virtuellen Widerstand

$$R_M := 4 \cdot f_s \cdot (L_S + L_K)$$

ein, ergibt sich für die Ausgangsspannung

$$V_{OUT} = \frac{1}{s \cdot C_F} \left[ D \cdot I_\alpha + \frac{V_{ZK}}{R_M} - \frac{V_{OUT}}{R_M} - \frac{V_{OUT}}{R_L} \right]$$

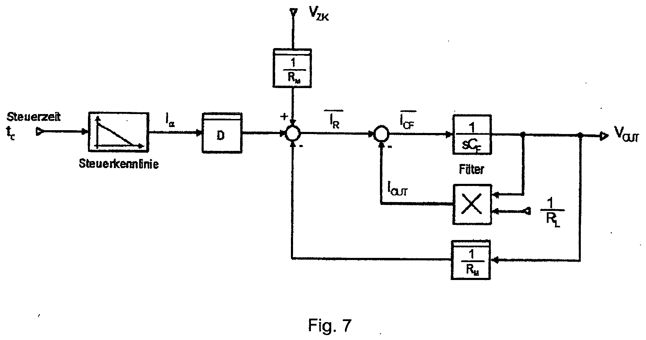

Aus dieser Gleichung kann man das Modell, d.h. das Strukturbild für das dynamische Verhalten des Konverters ableiten, wie in Fig. 7 dargestellt ist. Da das Modell auf die innerhalb eines Energieübertragungsintervalls gemittelten Werte basiert, gilt es für Frequenzen bis zu etwa einem Viertel der Schaltfrequenz.

Der Widerstand $R_M$ wirkt dabei so, dass er dem Lastwiderstand $R_L$ parallel geschaltet ist. Man kann durch die Dimensionierung von $L_S$, $L_K$ sowie $f_S$ erreichen, dass $R_M$ deutlich niedriger als der minimal zulässige Lastwiderstand wird, der durch die Leistungsgrenze des Konverters festgelegt ist. $R_M$ kann z.B. eine Größenordnung niedriger als $R_L$

ausgelegt werden.

Der Pol des kapazitiven Ausgangsfilters ändert sich damit praktisch nicht mehr, da neben der (bekannten) Filterkapazität $C_F$ die Parallelschaltung von $R_M$ und $R_L$ (und nicht $R_L$ alleine) ausschlaggebend für die Lage des Pols ist. Damit wird die Regelstrecke nahezu lastunabhängig. Der Pol kann damit einfach durch eine Nullstelle in der Übertragungsfunktion des Reglers kompensiert werden.

Im Gegensatz zum bekannten Flusswandlerprinzip erzeugen die Speicherdrosseln $L_S$ und $L_K$ keine Pole und Nullstellen in der Regelstrecke, da deren Ladezustand mit jeder Energieübertragung neu aufgesetzt wird. Damit entfällt auch die Notwendigkeit, Pole und Nullstellen mit Hilfe einer unterlagerten Stromregelung (current mode control) zu eliminieren.

Zusammenfassend lässt sich das dynamische Verhalten des Konverters wie folgt charakterisieren:

- Der Konverter ist unempfindlich gegenüber Laständerungen.
- Der Konverter reicht Änderungen der Zwischenkreisspannung an den Ausgang durch.
- Eine unterlagerte Stromregelung wird nicht benötigt.

Zusammenfassend ist anzumerken, dass die vorliegende Erfindung ein Konverterprinzip beschreibt, das insbesondere auf elektrische Ionentriebwerke abgestimmt werden kann, die zum Betrieb eine Hochspannung in der Größenordnung mehrerer tausend Volt benötigen (d.h. dass der Hochspannungstransformator ein Übersetzungsverhältnis von beispielsweise 1:20 aufweist). Das Konverterprinzip erlaubt es, die Ausgangsspannung über einen weiten Lastbereich konstant zu halten. Dies wird dadurch ermöglicht, dass die Amplituden der aufeinanderfolgenden Stromimpulse direkt und unabhängig voneinander eingestellt werden können. Zusätzliche Einrichtungen zur Vorregelung (der Zwischenkreisspannung) sind somit nicht notwendig.

Der Konverter arbeitet mit nahezu rechteckförmigen Strömen und fest eingestelltem Tastgrad.
Die parasitären Elemente des Hochspannungstransformators werden dabei gezielt ausgenutzt.

Der vorgeschlagene Konverter ist als Anodenstromversorgung für elektrische Ionentriebwerke bei Systemen mit geregelter (d.h. im stationären Fall nahezu konstanter) Busspannung konzipiert. Er ist unempfindlich gegen Impedanzänderungen des Triebwerks. Zudem kann durch eine vergleichsweise geringe Strombelastung der Bauteile sowie durch Einsparung von Filterbauteilen eine hohe spezifische Leistung erreicht werden.

Hierdurch lassen sich speziell die folgenden Vorteile erreichen:

1. Die Kurvenform des Ein- und Ausgangsstromes besteht aus eng aneinandergereihten Stromimpulsen. Damit kommt man mit sehr geringen Kapazitäts- und Induktionswerten für die Ein- und Ausgangsfilter aus.

2. Die Welligkeit des Ein- und Ausgangsstromes nimmt nicht mit fallender Schaltfrequenz zu. Man kann die Schaltfrequenz daher niedrig ansetzen, ohne dass die Filterbauteile und die Speicherdrosseln größer dimensioniert werden müssen. Dadurch können frequenzabhängige Verluste erheblich reduziert werden.

3. Durch den niedrigen Formfaktor des Stromes erhält man eine Reduzierung der ohmschen Verluste sowie der Kernverluste der Speicherdrosseln.

4. Die Übertragungsfunktion des Konverters besteht aus einem Tiefpass erster Ordnung, dessen Grenzfrequenz nur schwach lastabhängig ist.

**Bezugszeichen**

| | |
|---|---|
| $I_{ZK}$, $I_S$, $I_R$, $I_K$, $I_L$, $I_{CF}$ | Stromfluss im Zwischenkreis, der Speicherinduktivität, der Transformator Sekundärseite, der Hilfsinduktivität, der Last, im Glättungsfilter |
| $V_{ZK}$ | Zwischenkreisspannung |
| $S_A$, $S_B$, $S_C$, $S_D$ | Schalter |
| $L_S$ | Speicherinduktivität, Speicherdrossel |
| $V_B$, $V_D$ | Spannung über Schalter $S_B$, bzw. $S_D$ |
| $C_B$, $C_D$ | Kapazität parallel zu Schalter $S_B$, bzw. $S_D$ |
| HVT | Hochspannungstransformator |
| $D_Y$, $D_X$ | Erste und zweite Diode im Diodenzweig der Brücke |
| $L_K$ | Hilfsinduktivität |
| $C_R"$, $C_R'$ | Wicklungskapazität, Hilfskapazität |
| $C_R$ | reflektierte Gesamtkapazität |
| D1, D2, D3, D4 | Dioden im Brückengleichrichter |
| $C_F$ | Kapazität im Glättungsfilter |

| | |
|---|---|
| $R_L$ | Lastwiderstand |
| $V_{OUT}$ | Ausgangsspannung |
| $I_\alpha$ | Koppel-Stromstärke, Knickpunktstrom |
| $t_c$ | Steuerzeit |
| $t_d$ | Totzeit |
| D | Tastgrad |

**Patentansprüche**

1. Konverter, insbesondere für ein Ionentriebwerk, mit
   einer Brückenschaltung mit einem ersten und zweiten Brückenschaltungsanschluss, wobei die Brückenschaltung vier Schalter ($S_A$, $S_B$, $S_C$, $S_D$) mit je einem ersten und zweiten Anschluss umfasst, wobei je der erste Anschluss eines ersten ($S_A$) und dritten ($S_C$) Schalters mit dem ersten Brückenschaltungsanschluss, der zweite Anschluss des ersten Schalters ($S_A$) mit dem ersten Anschluss eines zweiten Schalters ($S_B$), der zweite Anschluss des dritten Schalters ($S_C$) mit dem ersten Anschluss eines vierten Schalters ($S_D$) und je der zweite Anschluss des zweiten und vierten Schalters ($S_B$, $S_D$) mit dem zweiten Brückenschaltungsanschluss verbunden ist,
   einer Speicherinduktivität ($L_S$) und einem Hochspannungtransformator (HVT) mit einer Primär- und einer Sekundärwicklung, wobei die Primärwicklung und die Speicherinduktivität ($L_S$) in Reihenschaltung mit dem zweiten Anschluss des ersten Schalters ($S_A$) und dem ersten Anschluss des vierten Schalters ($S_D$) und die Sekundärwicklung mit einem Ausgang des Konverters verbunden ist, **gekennzeichnet durch** eine
   Schaltersteuereinheit (SCU), die ausgebildet ist, um den vierten ($S_D$) Schalter um eine Steuerzeit ($t_c$), zeitlich verzögert gegenüber dem ersten Schalter ($S_A$), zu öffnen oder zu schließen, und die Schaltersteuereinheit (SCU) ausgebildet ist, um die Steuerzeit ($t_c$) derart zu bestimmen, dass sie höchstens einem Zehntel derjenigen Zeitspanne entspricht, die zwischen einem Öffnen und Schließen desselben Schalters ($S_A$, $S_D$) vergeht.

2. Konverter nach Anspruch 1,
   **dadurch gekennzeichnet, dass**
   zwischen der Primärwicklung des Hochspannungtransformators (HVT) und dem ersten Anschluss des vierten Schalters ($S_D$) eine Hilfsinduktivität ($L_K$) geschaltet ist.

3. Konverter nach einem der Ansprüche 1 oder 2,
   **dadurch gekennzeichnet, dass**
   der Konverter zwei Dioden ($D_X$ und $D_Y$) aufweist, wobei die Kathode der ersten Diode ($D_X$) zwischen die Primärwicklung des Hochspannungtransformators (HVT) und den ersten Anschluss des vierten Schalters ($S_D$) geschaltet und die Anode der Diode ($D_X$) mit dem zweiten Brückenschaltungsanschluss verbunden ist, und die Kathode der zweiten Diode ($D_Y$) mit dem ersten Brückenschaltungsanschluss verbunden und die Anode der zweiten Diode ($D_Y$) zwischen der Primärwicklung und den ersten Anschluss des vierten Schalters ($S_D$) geschaltet ist.

4. Konverter nach einem der Ansprüche 1 bis 3,
   **dadurch gekennzeichnet, dass**
   zwischen den ersten und zweiten Anschlüssen des zweiten und vierten Schalters ($S_B$, $S_D$) je eine Kapazität ($C_B$, $C_D$) geschaltet ist.

5. Konverter nach Anspruch 4,
   **dadurch gekennzeichnet, dass**
   zwischen den ersten und zweiten Anschlüssen aller Schalter ($S_A$, $S_B$, $S_C$, $S_D$) je eine Diode geschaltet ist.

6. Konverter nach einem der Ansprüche 1 bis 5,
   **dadurch gekennzeichnet, dass**
   die Schalter ($S_A$, $S_B$, $S_C$, $S_D$) MOSFET-Transistoren sind.

7. Konverter nach einem der Ansprüche 1 bis 6,
   **dadurch gekennzeichnet, dass**
   zur Sekundärwicklung des Hochspannungtransformators (HVT) eine Kapazität ($C_R"$) parallel geschaltet ist.

8. Konverter nach einem der Ansprüche 1 bis 7,
   **dadurch gekennzeichnet, dass**

die Schaltersteuereinheit (SCU) ausgebildet ist, um nach einer Totzeit ($t_d$) den zweiten Schalter ($S_B$) zu schließen, wenn der erste Schalter ($S_A$) geöffnet wurde, oder den zweiten Schalter ($S_B$) zu öffnen, wenn der erste Schalter ($S_A$) geschlossen wurde und den dritten Schalter ($S_C$) zu schließen, wenn der vierte Schalter ($S_D$) geöffnet wurde, oder den dritten Schalter ($S_C$) zu öffnen, wenn der vierte Schalter ($S_D$) geschlossen wurde.

**9.** Konverter nach einem der Ansprüche 1 bis 8,
**dadurch gekennzeichnet, dass**
die Schaltersteuereinheit (SCU) ausgebildet ist, um alle Schalter ($S_A$, $S_B$, $S_C$, $S_D$) während des Betriebs des Konverters innerhalb eines Toleranzbereichs von fünf Prozent gleich lange geöffnet und geschlossen zu halten.

**10.** Konverter nach einem der Ansprüche 1 bis 9,
**dadurch gekennzeichnet, dass**
die Schaltersteuereinheit (SCU) ausgebildet ist, um bei einem wiederholten Öffnen des vierten Schalters ($S_D$) nach einem Öffnen des ersten Schalters ($S_A$) eine gegenüber dem vorhergehenden Öffnen des vierten Schalters ($S_D$) veränderte Steuerzeit ($t_c$) zu verwenden.

**11.** Konverter nach Anspruch 2 und 8
**dadurch gekennzeichnet, dass**
die Schaltersteuereinheit (SCU) ausgebildet ist, um dann den dritten Schalter ($S_C$) zu schließen oder zu öffnen, wenn ein Strom durch die Hilfsinduktivität ($L_K$) den Wert null erreicht hat.

**12.** Verfahren zum Betreiben eines Konverters nach einem der vorhergehenden Ansprüche, wobei der vierte ($S_D$) Schalter um eine Steuerzeit ($t_c$) zeitlich verzögert gegenüber dem ersten Schalter ($S_A$) geöffnet oder geschlossen wird, und der dritte Schalter ($S_C$) um eine weitere Steuerzeit zeitlich verzögert zu dem zweiten ($S_B$) Schalter geöffnet oder geschlossen wird, und die Steuerzeit ($t_c$) durch die Schaltsteuereinheit (TCU) derart bestimmt wird, dass sie höchstens einem Zehntel derjenigen Zeitspanne entspricht, die zwischen einem Öffnen und Schließen desselben Schalters ($S_A$,$S_D$) vergeht.

**Claims**

**1.** Converter, especially for an ion propulsion system, having
a bridge circuit with a first and second bridge circuit terminal, the bridge circuit comprising four switches ($S_A$, $S_B$, $S_C$, $S_D$) each having a first and second terminal, the first terminal of each of a first ($S_A$) and third ($S_C$) switch respectively being connected to the first bridge circuit terminal, the second terminal of the first switch ($S_A$) being connected to the first terminal of a second switch ($S_B$), the second terminal of the third switch ($S_C$) being connected to the first terminal of a fourth switch ($S_D$), and the second terminal of the second and fourth switch ($S_B$, $S_D$) respectively being connected to the second bridge circuit terminal,
a storage inductance ($L_S$) and a high-voltage transformer (HVT) having a primary and a secondary winding, the primary winding and the storage inductor ($L_S$) being connected in series with the second terminal of the first switch ($S_A$) and the first terminal of the fourth switch ($S_D$), and the secondary winding being connected to an output of the converter,
**characterised by**
a switch control unit (SCU) adapted to open or close the fourth ($S_D$) switch by a control time (tc) delayed with respect to the first switch ($S_A$), and the switch control unit (SCU) being adapted to determine the control time (tc) so that it corresponds at most to one tenth of the time interval which elapses between opening and closing of the same switch ($S_A$, $S_D$).

**2.** Converter according to claim 1,
**characterised in that**
an auxiliary inductance (LK) is connected between the primary winding of the high voltage transformer (HVT) and the first terminal of the fourth switch ($S_D$).

**3.** Converter according to one of claims 1 or 2,
**characterised in that**
said converter comprises two diodes (DX and DY), wherein the cathode of the first diode (DX) is connected between the primary winding of the high voltage transformer (HVT) and the first terminal of the fourth switch ($S_D$) and the anode of the diode (DX) is connected to the second bridge circuit terminal, and the cathode of the second diode

## EP 1 976 108 B1

(DY) is connected to the first bridge circuit terminal and the anode of the second diode (DY) is connected between the primary winding and the first terminal of the fourth switch ($S_D$).

4. Converter according to one of claims 1 to 3,
   **characterised in that**
   a capacitor ($C_B$, $C_D$) is respectively connected between the first and second terminals of the second and fourth switches ($S_B$, $S_D$).

5. Converter according to claim 4,
   **characterised in that**
   a diode is connected between the first and second terminals of each switch ($S_A$, $S_B$, $S_C$, $S_D$).

6. Converter according to one of claims 1 to 5,
   **characterised in that**
   the switches ($S_A$, $S_B$, $S_C$, $S_D$) are MOSFET transistors

7. Converter according to one of claims 1 to 6,
   **characterised in that**
   a capacitor ($C_R$") is connected in parallel with the secondary winding of the high-voltage transformer (HVT).

8. Converter according to one of claims 1 to 7,
   **characterised in that**
   the switch control unit (SCU) is adapted to close the second switch ($S_B$) after a dead time (td) if the first switch ($S_A$) has been opened, or to open the second switch ($S_B$) if the first switch ($S_A$) has been closed, and to close the third switch ($S_C$) if the fourth switch ($S_D$) has been opened, or to open the third switch ($S_C$) if the fourth switch ($S_D$) has been closed.

9. Converter according to one of claims 1 to 8,
   **characterised in that**
   the switch control unit (SCU) is adapted to keep all switches ($S_A$, $S_B$, $S_C$, $S_D$) open and closed for equal periods of time during operation of the converter within a tolerance range of five percent.

10. Converter according to one of claims 1 to 9,
    **characterised in that**
    the switch control unit (SCU) is adapted to use a control time (tc) changed from the previous opening of the fourth switch ($S_D$) in case of a repeated opening of the fourth switch ($S_D$) after an opening of the first switch ($S_A$).

11. Converter according to claim 2 and 8
    **characterised in that**
    the switch control unit (SCU) is adapted to then close or open the third switch ($S_C$) when a current through the auxiliary inductance (LK) has reached zero.

12. Method for operating a converter in accordance with one of the preceding claims, wherein the fourth ($S_D$) switch is opened or closed time delayed by a control time (tc) with respect to the first switch ($S_A$), and the third switch (SC) is opened or closed further time delayed by a further control time with respect to the second ($S_B$) switch, and the control time (tc) is determined by the switch control unit (TCU) in such a way that it corresponds at most to one tenth of the time interval which elapses between opening and closing of the same switch ($S_A$, $S_D$).

## Revendications

1. Convertisseur, en particulier pour un moteur ionique, comprenant
   un circuit en pont comprenant un premier et un second raccordement de circuit en pont, le circuit en pont comprenant quatre interrupteurs ($S_A$, $S_B$, $S_C$, $S_D$), chacun ayant un premier et second raccordement, le premier raccordement d'un premier ($S_a$) et d'un troisième ($S_c$) interrupteur étant relié au premier raccordement de circuit en pont, le deuxième raccordement du premier interrupteur ($S_C$) étant relié au premier raccord d'un second interrupteur ($S_B$), le deuxième raccordement du troisième interrupteur ($S_C$) étant relié au premier raccordement d'un quatrième interrupteur ($S_D$) et le deuxième raccordement du deuxième et du quatrième interrupteur ($S_B$, $S_D$) étant relié au deuxième raccordement de circuit en pont,
une inductance d'accumulation ($L_s$) et un transformateur de haute tension (HVT) avec un enroulement primaire et un enroulement secondaire, l'enroulement primaire et l'inductance d'accumulation ($L_s$) montés en série étant reliées au deuxième raccordement du premier interrupteur ($S_A$) et au premier raccordement du quatrième interrupteur ($S_D$) et l'enroulement secondaire étant relié à une sortie du convertisseur,
**caractérisé en ce qu'**une unité de commande d'interrupteur (SCU) qui est conçue pour ouvrir ou fermer le quatrième interrupteur ($S_D$) d'une durée de commande ($t_c$), décalée temporellement par rapport au premier interrupteur ($S_A$), et l'unité de commande d'interrupteur (SCU) étant conçue pour déterminer le temps de commande ($t_c$) de sorte qu'elle corresponde au maximum à un dixième de chaque intervalle de temps qui s'écoule entre une ouverture et une fermeture dudit interrupteur ($S_A$, $S_D$).

2. Convertisseur selon la revendication 1, **caractérisé en ce qu'**entre l'enroulement primaire du transformateur de haute tension (HVT) et le premier raccordement du quatrième interrupteur ($S_D$) est raccordée une inductance auxiliaire ($L_K$).

3. Convertisseur selon la revendication 1 ou la revendication 2, **caractérisé en ce que** le convertisseur présente deux diodes ($D_X$ et $D_Y$), la cathode de la première diode ($D_X$) est montée entre l'enroulement primaire du transformateur de haute tension (HVT) et le premier raccordement du quatrième interrupteur ($D_S$) et l'anode de la diode ($D_X$) étant reliée au deuxième raccordement de circuit en pont, et la cathode de seconde diode ($D_Y$) étant reliée au premier raccordement de circuit en pont, et l'anode de la seconde diode ($D_Y$) étant montée entre l'enroulement primaire et le premier raccordement du quatrième interrupteur ($S_D$).

4. Convertisseur l'une quelconque revendication 1 à 3, **caractérisé en ce que** le premier et le deuxième raccordement du deuxième et quatrième interrupteur ($S_B$, $S_D$) étant montés en fonction d'une capacité ($C_B$, $C_D$).

5. Convertisseur selon la revendication 4, **caractérisé en ce qu'**entre le premier et le deuxième raccordement de tous les interrupteurs ($S_A$, $S_B$, $S_C$, $S_D$) étant montée une diode.

6. Convertisseur selon l'une quelconque revendication 1 à 5, **caractérisé en ce que** les interrupteurs ($S_A$, $S_B$, $S_C$, $S_D$) étant des transistors MOSFET.

7. Convertisseur selon l'une quelconque revendication 1 à 6, **caractérisé en ce que** par rapport à l'enroulement secondaire du transformateur de haute tension (HVT) étant montée en parallèle une capacité ($C_R$").

8. Convertisseur selon l'une quelconque revendication 1 à 7, **caractérisé en ce que** l'unité de commande d'interrupteur (SCU) est conçue pour fermer le deuxième interrupteur après un temps mort ($t_d$) lorsque le premier interrupteur ($S_A$) a été ouvert ou pour ouvrir le deuxième interrupteur ($S_B$) si le premier interrupteur ($S_A$) a été fermé et pour fermer le troisième interrupteur ($S_C$) si le quatrième interrupteur ($S_D$) a été ouvert, ou pour ouvrir le troisième interrupteur ($S_C$) si le quatrième interrupteur ($S_D$) a été fermé.

9. Convertisseur selon l'une quelconque revendication 1 à 8, **caractérisé en ce que** l'unité de commande d'interrupteur (SCU) est conçue pour maintenir fermés ou ouverts aussi longtemps tous les interrupteurs ($S_A$, $S_B$, $S_C$, $S_D$) pendant le fonctionnement du convertisseur dans une plage de tolérance de cinq pourcents.

10. Convertisseur selon l'une quelconque revendication 1 à 9, **caractérisé en ce que** l'unité de commande d'interrupteur (SCU) est conçue, en cas d'une ouverture répétée du quatrième interrupteur ($S_D$) après une ouverture du premier interrupteur ($S_A$), pour utiliser un temps de commande ($t_c$) modifiée par rapport à l'ouverture précédente du quatrième interrupteur ($S_D$).

11. Convertisseur selon la revendication 2 et la revendication 8, **caractérisé en ce que** l'unité de commande d'interrupteur (SCU) est conçue pour ensuite fermer ou ouvrir le troisième interrupteur ($S_C$) lorsqu'un courant a atteint la valeur nulle par l'inductance auxiliaire ($L_k$).

12. Procédé de fonctionnement d'un convertisseur selon l'une quelconque des revendications précédentes, le quatrième ($S_D$) interrupteur étant ouvert ou fermé d'une durée temporelle ($t_c$) décalée dans le temps par rapport au premier interrupteur ($S_A$), et le troisième interrupteur ($S_C$) étant fermé ou ouvert d'une durée temporelle décalée par rapport au deuxième interrupteur ($S_B$), et le temps de commande ($t_C$) étant déterminé par l'unité de commande d'interrupteur (TCU) de sorte qu'il corresponde au maximum à un dixième de chaque intervalle de temps qui s'écoule entre une ouverture et une fermeture dudit interrupteur ($S_A$, $S_D$).

Fig. 1

Fig. 2

Fig. 3

Fig. 4

Steuerkennlinienfeld

Knickpunktstrom I$_{\alpha}$ in A

14
12
10
8
6
4
2
0

102
101.5
101
100.5
100
99.5
99
98.5
98    2000

Zwischenkreisspannung V$_{ZK}$ in V

0
500
1000
1500

Steuerzeit t$_c$ in ns

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0884830 A2

**In der Beschreibung aufgeführte Nicht-Patentliteratur**

- **IVO BARBI ; ROGER GULES.** Isolated DC-DC Converters With High-Output Voltage for TWTA Telecommunication Satellite Applications. *IEEE Transactions on Power Ectronics,* Juli 2003, vol. 18 (4

- **GEOFFREY N. DRUMMOND ; JOHN D. WILLIAMS.** Ion and Plasma Thruster Test Console Based on Three-Phase Resonant Conversion Power Modules. *42nd AIAA/ASME/SAE/ASEE Joint Propulsion Conference & Exhibit,* 09. Juli 2006